# FASCICULE DE BREVET EUROPEEN

(11) **EP 2 986 507 B1**
(45) Date de publication et mention de la délivrance du brevet: **14.06.2017**
(21) Numéro de dépôt: 14725229.0
(22) Date de dépôt: 16.04.2014
(51) Int. Cl.: B64D 29/06, F01D 25/24, F02K 1/64, B64D 33/02, F02C 7/04

(54) **NACELLE POUR TURBORÉACTEUR D'AÉRONEF À LÈVRE AVANT ÉTENDUE**
GONDEL FÜR FLUGZEUGTURBOSTRAHLTRIEBWERK MIT VERLÄNGERTER FRONTLIPPE
NACELLE FOR AN AIRCRAFT TURBOJET ENGINE WITH AN EXTENDED FRONT LIP

(30) Priorité: 19.04.2013 FR 1353584
(43) Date de publication de la demande: 24.02.2016
(73) Titulaire: Safran Nacelles, 76700 Gonfreville-l'Orcher (FR)
(72) Inventeur: CARUEL, Pierre, F-76600 Le Havre (FR)
(74) Mandataire: Gaillarde, Frédéric F. Ch.
(86) Numéro de dépôt international: PCT/FR2014/050930
(87) Numéro de publication internationale: WO 2014/170609

(56) Documents cités:
- EP-A1- 1 715 160
- FR-A1- 2 757 823
- FR-A1- 2 906 568
- FR-A1- 2 914 363
- FR-A1- 2 936 777

## Description

La présente invention concerne une nacelle pour turboréacteur d'aéronef à lèvre avant étendue présentant une structure nouvelle et avantageuse.

Un aéronef est mû par un ou plusieurs turboréacteurs logés chacun dans au moins une nacelle. La nacelle présente généralement une structure tubulaire comprenant une section d'entrée d'air en amont du turboréacteur, une section médiane destinée à entourer une soufflante du turboréacteur, une section aval abritant les moyens d'inversion de poussée. La section aval de la nacelle entoure le générateur de gaz du turboréacteur qui est terminé par une tuyère d'éjection située en aval du turboréacteur. La section d'entrée d'air de la nacelle comporte notamment une lèvre avant de forme générale annulaire qui intercepte le flux d'air d'entrée de la nacelle qui est dirigé vers une soufflante.

L'allongement de la lèvre avant de la nacelle est notamment recherché pour des raisons aérodynamiques, afin d'étendre vers l'aval la zone d'écoulement d'air laminaire. Mais son allongement n'est pas sans répercussion sur la conception du reste de la nacelle. Particulièrement, la nacelle doit présenter des performances de rigidité mécanique de manière à réduire ses déformations lors des sollicitations en fonctionnement.

Dans l'état de la technique, il existe un modèle de nacelle par exemple illustré dans le document US - A - 8.197.191 dans lequel la lèvre avant est constituée par une pièce unique de forme annulaire et qui est directement fixée sur des cloisons de support intérieures à la nacelle. On note aussi l'utilisation d'une cloison amont qui forme un volume annulaire derrière la lèvre avant en forme de « D ». La cloison amont (ou avant) est généralement solidaire de l'enveloppe intérieure de la section d'entrée de la nacelle par son bord avant.

Dans ce document, la section d'entrée de nacelle d'un turboréacteur d'aéronef présente une enveloppe de turboréacteur comportant un flanc avant. La section d'entrée de nacelle comporte :
- une pièce acoustique interne sensiblement cylindrique ayant un bord amont et un bord aval ;
- une enveloppe exterieure comprenant une lèvre présentant un bord intérieur et une partie externe sensiblement cylindrique présentant une partie aval;
- une bride de montage aval configurée pour le montage de la section d'entrée à une bride avant d'une enveloppe du turboréacteur et
- une cloison arrière présentant une extrémité aval pour solidariser la partie externe de l'enveloppe extérieure à la bride de montage aval.

Il en résulte que la pièce qui forme la lèvre avant qui limite l'entrée d'air frais de la nacelle présente en coupe une forme complexe et de grandes dimensions.

Dans le brevet US-A-8.267.642, il est défini une enveloppe externe d'une section d'entrée de nacelle qui comporte une partie intérieure sensiblement cylindrique et une cloison arrière. L'enveloppe externe comporte :
- une lèvre avant avec des attaches sur la partie intérieure ; et
- une enveloppe externe s'étendant vers l'aval à partir de la lèvre et destinée à être attachée à la cloison arrière.

Dans le document, la lèvre avant et l'enveloppe externe forment une pièce intégrale.

Une telle disposition décrite dans l'état de la technique vise essentiellement deux objectifs. Une telle structure permet de résister à un événement de type rupture d'aube de la soufflante du turboréacteur monté à l'intérieur de la nacelle. De plus, elle permet une économie de masse de matériau et de complexité de pièces par rapport à l'état de la technique plus ancien dans lequel l'enveloppe externe et la lèvre avant de la section d'entrée de la nacelle sont constituées par des pièces séparées.

Cependant, pour avantageuses que soient ces dispositions, elles exigent l'adjonction de renforts annulaires, disposés à l'intérieur de l'enveloppe externe. La pièce unique ainsi formée, par ailleurs est d'une grande dimension et d'un volume important. Sa réalisation exige un outil complexe et coûteux.

Mais, la solution d'une lèvre intégrale avec l'enveloppe externe de la section d'entrée de la nacelle se heurte aussi à des problèmes d'adaptation à d'autres exigences.

Parmi celles-ci, on citera notamment le problème de la maintenance. En effet, afin d'inspecter les différents systèmes comme le dégivrage ou inspecter l'état de la structure, il faut pouvoir accéder à l'espace compris entre les cloisons avant et arrière (ou aval) qui est alors inaccessible si la pièce formant la lèvre et l'enveloppe externe est bien intégrale.

Pour résoudre cette nécessité de permettre un accès au volume créé sous l'enveloppe extérieure de la section d'entrée d'air de la nacelle, il faut prévoir alors la découpe d'un passage pour une trappe de visite qui réduit considérablement la rigidité de l'ensemble et ruine l'intérêt de disposer d'une pièce intégrale unissant la lèvre avant et l'enveloppe externe.

Enfin il existe une structure particulière de l'enveloppe intérieure de la nacelle. Cette enveloppe intérieure comporte une partie amont (du côté de la section d'entrée d'air de la nacelle) constituée par une virole acoustique et une partie aval (du côté de l'inverseur de poussée) comprenant un carter de soufflante. Les deux parties amont et aval sont reliées par une bride d'attache. Or, il existe une opération de maintenance qui est rendue impossible par une lèvre avant avancée intégrée avec la cloison aval. En effet, la peau constituée par cette lèvre avant intégrale avec la cloison aval devrait être interrompue pour ménager une trappe de visite, ce qui la fragilise d'une part et rompt la continuité de peau aérodynamique d'autre part. En outre, on connaît le document FR 2914363, qui est considéré comme l'art antérieur le plus proche et décrit les caractéristiques du préambule de la revendication 1. La présente invention apporte remède à ces inconvénients de l'état de la technique.

En effet, la présente invention concerne une nacelle pour turboréacteur d'aéronef du genre comportant une enveloppe intérieure sensiblement cylindrique, une enveloppe extérieure sensiblement cylindrique, une cloison aval et une cloison amont solidaires de ladite enveloppe intérieure, et une lèvre avant disposée en avant de la dite cloison amont, l'enveloppe intérieure étant du genre comportant une partie amont comportant une virole acoustique reliée par une bride d'attache à une partie aval comportant un carter de soufflante. Selon l'invention, la lèvre avant est étendue et disposée par-dessus la cloison amont en présentant un bord aval entre les cloisons amont et aval pour venir se solidariser avec un bord homologue de l'enveloppe extérieure de manière à conserver l'accès de maintenance à ladite bride d'attache.

Selon d'autres caractéristiques optionnelles de l'invention :
- la cloison aval est solidaire du carter de soufflante 11 ;
- la nacelle est du genre comportant un inverseur de poussée, et la cloison aval est disposée en limite de la zone de repos de l'inverseur de poussée et en ce que l'enveloppe extérieure s'étend au-delà de l'inverseur de poussée sur la dite cloison aval ;
- l'enveloppe extérieure est fixée aussi au bord de la cloison aval ;
- la fixation des bords homologues de la lèvre avant étendue et de l'enveloppe extérieure comporte au moins une plaque annulaire portant des moyens de fixation au bord aval de la lèvre avant étendue et au bord homologue de l'enveloppe extérieure ;
- une plaque annulaire est intégrale avec la face intérieure du bord aval de la lèvre avant étendue ;
- la lèvre avant étendue et/ou l'enveloppe extérieure sont réalisées en au moins deux secteurs angulaires ;
- au moins un secteur angulaire de l'enveloppe extérieure est doté de moyens de fixation amovibles à la lèvre avant étendue de moyens de fixation amovibles à la cloison aval et de moyens de fixation amovibles aux secteurs angulaires adjacents de l'enveloppe extérieure ;
- la lèvre avant étendue et/ou l'enveloppe extérieure est réalisée en métal, en aluminium notamment, et/ou en matériau composite ;
- la face intérieure de l'enveloppe extérieure et/ou de la lèvre avant étendue comporte des renforts annulaires ;
- la nacelle comporte au moins une cloison supplémentaire, solidaire du carter de soufflante du turboréacteur et disposée entre la cloison amont et la cloison aval, et s'étendant sur au moins une partie de la circonférence de l'entrée d'air.

D'autres caractéristiques et avantages de la présente invention seront mieux compris à l'aide de la description et des dessins annexés parmi lesquels :
- la Figure 1 représente une nacelle de l'état de la technique ;
- la Figure 2 représente un mode de réalisation de la présente invention ;
- la Figure 3 représente un détail du mode de réalisation de la Figure 1 ;
- les Figures 4 et 5 représentent deux vues d'un éclaté de montage d'un turboréacteur dans une nacelle de l'invention ;
- les Figures 6 à 9 représentent des détails du mode de réalisation de la Figure 2 ; et
- la Figure 10 représente un autre mode de réalisation de la présente invention.

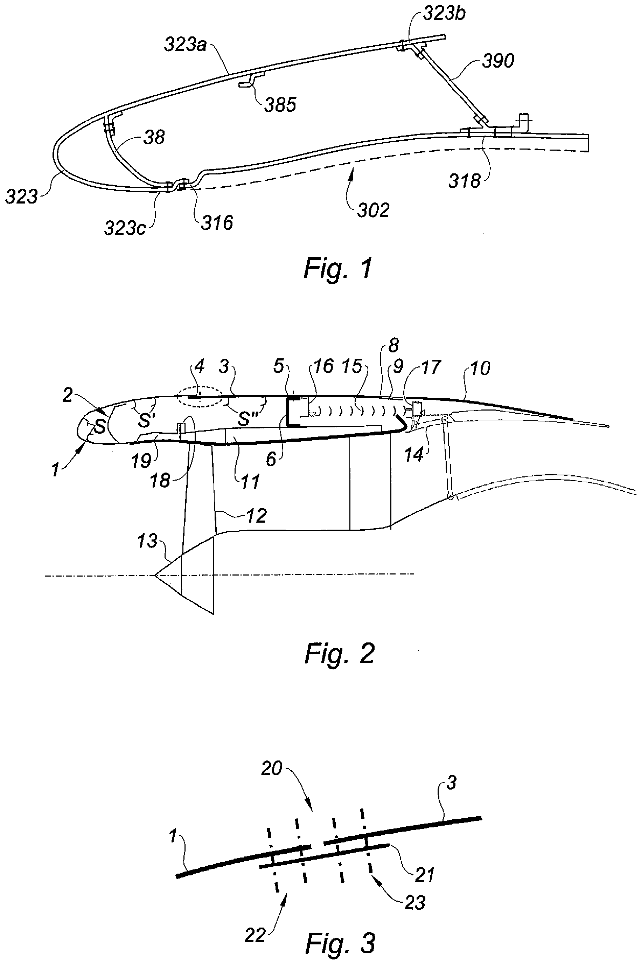

A la Figure 1, on a représenté la section d'entrée d'une nacelle de l'état de la technique. Dans la suite de la description, la nacelle est orientée avec sa section d'entrée à gauche au dessin avec l'entrée d'air frais qui détermine une position amont, et vers la droite, vers la sortie des gaz chauds qui détermine une position aval. La section d'entrée de la nacelle de l'état de la technique comporte principalement :
- une pièce acoustique interne sensiblement cylindrique 302 ayant un bord amont et un bord aval ;
- une enveloppe externe comprenant une lèvre 323 présentant un bord intérieur 323c et une partie sensiblement cylindrique externe 323a présentant une partie aval ou arrière 323b ;
- une cloison avant ou amont 38 qui s'étend en arrière de la lèvre 323 proprement dite et qui s'étend radialement entre le bord intérieur 323c de la lèvre avant et sa partie extérieure 323a ; et
- une cloison aval ou arrière 390 sensiblement d'extension radiale présentant une extrémité aval pour solidariser la partie externe 323a de l'enveloppe extérieure à une bride de montage aval.

A la Figure 2, on a représenté un mode de réalisation de la présente invention dans lequel la cloison arrière 6 a été reculée jusqu'à venir au contact avec la partie avant d'un inverseur de poussée 15-17 dans sa position et/ou sa zone de repos. Ici, l'inverseur de poussée est un inverseur de poussée à grilles 16. Mais d'autres types, comme un inverseur de poussée à portes, sont prévus. On note que la position de repos est prise quand l'inverseur de poussée est dans un état où il n'intervient pas sur l'écoulement issu de la soufflante (non représentée). Dans cet état, l'inverseur de poussée est escamoté sous l'enveloppe extérieure 3 qui sert de capot de soufflante. A la différence, dans son état actif, l'inverseur de poussée sort de sa zone de repos vers l'aval et l'écoulement issu de la soufflante, ainsi qu'il sera expliqué plus loin, est inversé et revient à l'extérieur de l'enveloppe extérieure ou capot de soufflante 3 vers l'amont de la nacelle.

Dans un état de la technique, la lèvre avant formait seulement une section avec la cloison avant (ou amont) permettant de fermer un canal annulaire dans lequel notamment peut circuler un fluide de dégivrage de la nacelle. Puis, l'enveloppe externe était solidarisée du bord supérieur de la lèvre avant et poursuivait son extension jusqu'à la cloison arrière et au-delà pour atteindre la zone amont de la nacelle.

L'état de la technique cité de lèvre avant étendue et décrit à l'aide de la Figure 1, permet d'éviter que l'imperfection de surface à la jonction entre la lèvre et l'enveloppe extérieure et les rivets se trouvant dans la zone avant (amont) de l'enveloppe extérieure de la section d'entrée de la nacelle ne viennent perturber l'écoulement de l'air autour de la nacelle.

Cependant, l'allongement de la lèvre avant jusqu'à la cloison arrière, si elle assure une fixation du bord supérieur de la lèvre avant étendue jusqu'à la cloison arrière, rend inaccessible en maintenance le volume réservé entre les cloisons avant (amont) et arrière (aval).

Dans le mode de réalisation de l'invention décrit à la Figure 2, la cloison aval 6 est reculée jusqu'à son extrême position possible, définie par la position escamotée de l'inverseur de poussée 15-17, quelle que soit sa technologie.

Il est entendu que, notamment si la nacelle n'est pas équipée d'un inverseur de poussée, la position longitudinale de la cloison aval le long de la nacelle n'est pas déterminée et le bord aval de l'enveloppe extérieure 3 ou capot de soufflante, peut s'étendre jusqu'à la section médiane de la nacelle.

Dans le mode de réalisation de l'invention représenté à la Figure 2, l'enveloppe intérieure sensiblement cylindrique 19, 11 est un corps annulaire composé de deux pièces, respectivement une virole acoustique 19 et un carter de soufflante, réunies par une bride d'attache 18. Selon l'invention, les deux cloisons amont 2 et aval 6 sont solidaires par leurs bords intérieurs, dirigés vers l'axe central de la nacelle, de la surface extérieure de l'enveloppe intérieure sensiblement cylindrique 19, 11. Ainsi, dans le mode de réalisation de la Figure 2, les deux cloisons amont 2 et aval 6 sont solidaires par leurs bords intérieurs respectivement de la virole acoustique 19 et du carter de soufflante 11.

Selon une caractéristique essentielle de l'invention, le bord aval 4 de la lèvre avant 1 est alors étendu au-delà de la cloison amont (avant) 2. Son extension longitudinale le long de la nacelle est interrompue cependant au-dessus du volume réservé entre les deux cloisons amont 2 et aval 6 et le plus loin possible de façon à maximiser la zone d'écoulement laminaire sur l'enveloppe extérieure, dans les limites des contraintes de fabrication de la pièce et tout en permettant l'accès aux organes de fixation de l'entrée d'air à la bride 18 du carter de soufflante 11.

Dans le mode de réalisation de la Figure 2, la section d'entrée de la nacelle comporte aussi une enveloppe sensiblement cylindrique intérieure 19, 11 dont l'extrémité avant (amont) est attachée de manière connue à la fois au bord intérieur de la lèvre avant 1 et au bord inférieur de la cloison amont 2, et dont l'extrémité arrière (aval) est attachée de manière démontable à la bride 18 du carter de soufflante 11. Pour situer les composants de la nacelle, on a aussi représenté le moyeu 13 de la soufflante du turboréacteur monté à l'intérieur de la nacelle et une aube 12 de cette soufflante.

L'enveloppe extérieure 3 de la section d'entrée de la nacelle présente donc un bord longitudinal amont qui se trouve solidarisé du bord aval 4 de la lèvre avant étendue 1 et un bord longitudinal aval 8 qui vient dans la coupe présentée à la Figure 2 en interface avec le capot externe mobile 10 de l'inverseur de poussée 15-17. La cloison arrière (aval) 6 est solidaire, du carter de soufflante 11 de l'enveloppe intérieure 19, 11. La cloison aval 6 a pour fonction de supporter la face intérieure de l'enveloppe extérieure 3. Dans un mode de réalisation, elle porte aussi des moyens de fixation 5 à l'enveloppe extérieure 3.

Dans le mode de réalisation de la Figure 2, pour des raisons de construction tenant au turboréacteur, la virole acoustique 19 qui compose l'enveloppe intérieure 19, 11 s'interrompt au niveau des aubes de la soufflante et alors, l'enveloppe intérieure 19, 11 se poursuit par le seul carter de soufflante 11, qui se distingue du capot de soufflante constitué avec l'enveloppe extérieure 3. Le carter de soufflante 11 porte dans tous les modes de réalisation le bord inférieur de la cloison aval 6 et s'étend donc au moins jusqu'à la zone de repos de l'inverseur de poussée 15-17.

L'enveloppe intérieure 19, 11 comporte une virole acoustique qui est constituée essentiellement par un panneau composite qui permet de réduire l'émission sonore de la section d'entrée de la nacelle. Cette virole acoustique est ici étendue jusqu'à la section médiane de la nacelle.

La cloison amont (avant) 2 a aussi une fonction de supporter la lèvre supérieure 1, le bord extérieur circonférentiel de la cloison amont 2 venant en portée sur la face intérieure de la lèvre avant 1. Préférentiellement selon l'invention, la cloison amont 2 ne porte pas de moyen de fixation traversant susceptible de perturber le profil aérodynamique de la section d'entrée de la nacelle.

La suite de la section d'entrée de la nacelle qui comporte donc la lèvre étendue 1 et l'enveloppe extérieure 3, ou capot de soufflante, se poursuit par une section aval qui est représentée à la Figure 2 par un capot externe mobile 10 de l'inverseur de poussée 15-17. Lorsque le capot externe mobile 10 est en position ouverte ou escamotée, l'inverseur de poussée 15-17 est alors en configuration d'inversion de poussée et le jet d'air est alors au moins partiellement inversé à l'extérieur de la section d'entrée de la nacelle.

Il en résulte que l'extension vers l'aval de l'enveloppe extérieure 3 est limitée par la conception de la section aval de la nacelle et plus particulièrement par la conception de l'inverseur de poussée. En effet, le bord longitudinal aval 8 doit alors se trouver à la limite de l'extension du jet inversé d'air produit par l'inverseur de poussée 15-17.

Dans le mode de réalisation de la Figure 2, l'inverseur de poussée comporte principalement un cadre amont 16 et un cadre aval 17 entre lesquels une pluralité de grilles sont montées qui sont ici configurées de manière à être inactives. Lorsque un actionneur convenable (non représenté) est activé pour inverser le jet d'air traversant la section d'entrée de la nacelle, le capot externe mobile 10 passe en position escamotée, un volet 14 disposé au niveau du bord aval de l'enveloppe intérieure 19, 11 bascule pour intercepter au moins une partie du jet d'air d'entrée de la nacelle issu de la soufflante (non représentée) et les grilles sont alors disposées et étendues de manière à profiler le jet vers l'avant (amont) de la nacelle, mais à l'extérieur de l'enveloppe extérieure ou capot de soufflante 3.

La section d'entrée de la nacelle du mode de réalisation de la Figure 2 de l'invention comporte donc principalement :
- la lèvre avant étendue 1 ; et
- l'enveloppe extérieure ou capot de soufflante 3 ;
qui sont solidaires l'une de l'autre par leur bords en regard 4 et par les deux cloisons amont 2 et aval 6.

On note que le bord aval 8 de l'enveloppe extérieure 3 est libre tandis que la face intérieure de lèvre avant étendue 1 est solidaire de l'extrémité intérieure de la cloison amont 2 et du bord amont de l'enveloppe intérieure 19, 11.

A la Figure 3, on a représenté un mode de réalisation d'un détail de la Figure 2. Le bord aval 4 (Figure 2) de la lèvre avant étendue 1 vient en effleurement sur le bord longitudinal homologue de l'enveloppe extérieure 3. La fixation est réalisée à l'aide d'une plaque annulaire 21 qui porte des moyens de fixation du genre rivets et/ou boulons représentés seulement par des traits d'axe 22 avec la lèvre avant 1 et 23 avec l'enveloppe extérieure 3.

Dans un mode de réalisation, au moins pour un secteur radial de l'enveloppe extérieure 3, la fixation est prévue du genre amovible. C'est principalement le cas quand l'enveloppe extérieure 3 est construite en plusieurs (au moins deux) panneaux recouvrant des secteurs radiaux de l'enveloppe extérieure et quand l'un au moins d'entre eux est démontable lors d'opérations de maintenance.

Dans cette disposition, au moins le ou les panneaux démontables de l'enveloppe extérieure 3 sont aussi fixés à l'aide de fixations amovibles sur la cloison aval 6, de sorte qu'un tel panneau peut alors être démonté et l'accès au volume enfermé dans cette section d'entrée de la nacelle devient possible pour les opérations de maintenance et/ou de visite.

Un avantage de cette disposition de panneaux amovibles est d'éviter le recours à des trappes de visite qui constituent des affaiblissements de la rigidité mécanique et des chemins d'efforts de l'enveloppe extérieure 3.

Notamment lorsqu'au moins un panneau de l'enveloppe extérieure 3 est amovible, la plaque annulaire 21 qui permet la fixation relative 4 des bords homologues de la lèvre avant étendue et de l'enveloppe extérieure 3 est fixée de manière permanente à la face intérieure du bord aval de la lèvre avant étendue.

Dans un mode de réalisation de l'invention, la plaque annulaire 21 est intégrale avec le bord aval de la lèvre avant étendue 1. A cette fin, elle est une partie disposée sur la face intérieure du bord supérieur 4 de la lèvre avant 1.

La lèvre avant étendue 1 est en métal, plus particulièrement en aluminium, dans un mode de réalisation de l'invention. Dans un autre mode de réalisation, la lèvre avant étendue 1 est réalisée en un matériau composite obtenu à partir d'un moulage d'une résine imprégnant un tissu technique réalisé à partir de fibres techniques comme des fibres de carbone, des fibres de verre ou des fibres de poly(p-phénylènetéréphtalamide) (kevlar ®).

L'enveloppe extérieure 3 est en métal, plus particulièrement en aluminium, dans un mode de réalisation de l'invention. Dans un autre mode de réalisation, l'enveloppe extérieure 3 est réalisée en un matériau composite obtenu à partir d'un moulage d'une résine imprégnant un tissu technique réalisé à partir de fibres techniques comme des fibres de carbone, des fibres de verre ou des fibres de poly(p-phénylènetéréphtalamide) (kevlar ®).

Dans un mode de réalisation représenté à la Figure 2, la face intérieure de l'enveloppe extérieure 3 et/ou de la lèvre avant étendue 1 comporte des renforts annulaires. Sur la face intérieure de la lèvre avant étendue 1, on a disposé une première série de renforts, ou raidisseurs, S qui affectent la forme de pièces annulaires dont la section est en forme de « C » pour apporter un renforcement de la rigidité de la partie de la lèvre 1 qui sépare le flux d'air d'entrée. Les renforts annulaires S sont des pièces de révolution qui couvrent la face intérieure de la lèvre avant 1 sur toute sa périphérie. Les renforts annulaires S sont des pièces solidarisés par collage sur l'épaisseur de la lèvre avant ou viennent de matière avec celle-ci, notamment quand la lèvre avant est réalisée en matériau composite.

La lèvre avant étendue 1 du mode de réalisation de la Figure 2 comporte aussi une seconde série de renforts, ou raidisseurs, S', disposés au-delà de la cloison amont et qui sont analogues aux renforts S.

Sur la face intérieure de l'enveloppe extérieure 3, on a disposé aussi une série de renforts, ou raidisseurs, S" qui sont analogues aux renforts S.

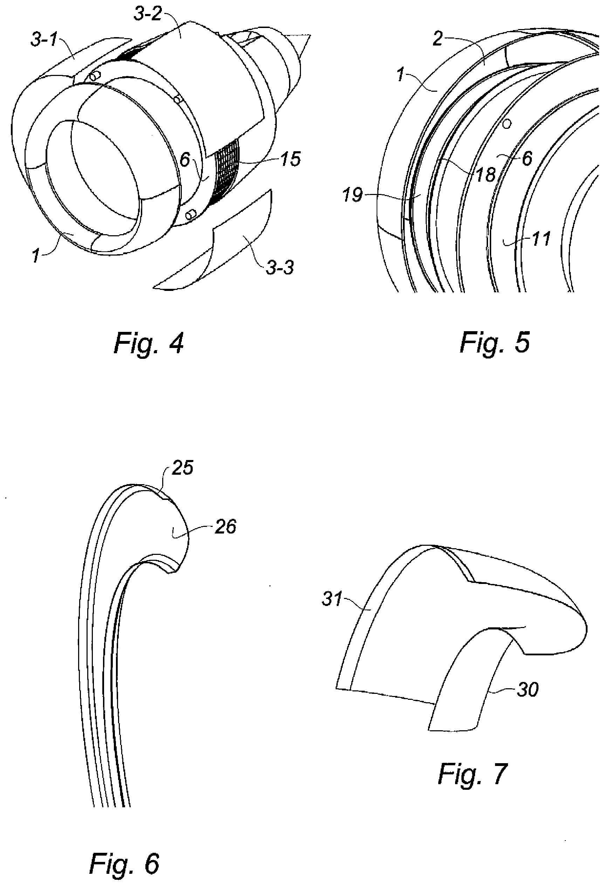

Aux Figures 4 et 5, on a représenté deux vues d'un éclaté de montage d'un turboréacteur dans une nacelle de l'invention. A la Figure 4, la lèvre avant étendue 1 a été représentée en quatre secteurs assemblés, chaque secteur occupant un secteur angulaire de 90° tandis que l'enveloppe extérieure 3 est composée de trois secteurs en éclaté, respectivement 3-1 à 3-3. Chaque secteur 3-1 à 3-3 occupe un secteur angulaire de 90 à 180° et vient s'installer sur le bord aval de la lèvre avant 1 et sur le bord radial extérieur de la cloison aval 6. On a porté la cloison aval 6 et les grilles 15 de l'inverseur de poussée et on a aussi représenté la partie arrière du turboréacteur avec la tuyère et le cône d'éjection.

A la Figure 5 qui est une vue de l'arrière (aval) de la nacelle, les mêmes éléments que ceux des autres figures portent les mêmes numéros de référence. La lèvre avant 1 est vue depuis son bord aval, avec une partie de la cloison amont 2 et la cloison aval 6 montées sur le carter de soufflante, Figure 2).

A la Figure 6, on a représenté une partie d'une cloison amont (ou avant) qui comporte un fond incurvé en forme de « C » 26 et deux bords latéraux comme le bord 25. La fonction de la cloison amont est de renforcer la rigidité mécanique de la section d'entrée de la nacelle, mais aussi de servir d'arrêt aux projectiles qui peuvent impacter la nacelle, notamment les oiseaux percutés au cours du vol. La fonction de la cloison amont 2 est aussi de supporter la face inférieure de la lèvre avant étendue (voir 1, Figure 2). Préférentiellement, elle n'a pas de moyen de fixation traversant avec la lèvre avant ainsi qu'il a été exposé ci-dessus, de façon à éviter toute imperfection de surface sur la face extérieure et ainsi conserver un écoulement laminaire le plus loin possible vers l'aval.

A la Figure 7, on a représenté une partie d'une lèvre avant étendue selon l'invention, qui comporte un bord d'attaque 30 qui délimitera le flux d'air lors du vol et se termine par un bord aval 31 qui est destiné à se raccorder avec le bord homologue de l'enveloppe extérieure3. On note la présence de la plaque d'appui, (non référencée, voir 21, Figure 3) sur laquelle vient se poser le bord de l'enveloppe.

La lèvre avant étendue permet de délimiter le flux d'air d'entrée dans le réacteur lors du vol. Mais, avec la cloison amont, elle délimite aussi un volume intérieur en forme de « D » qui est utilisé pour recevoir un fluide caloporteur pour assurer le dégivrage de la section d'entrée de la nacelle lors de vols en conditions givrantes.

On remarque que l'extension vers l'aval de la lèvre avant étendue de l'invention, notamment grâce à son système de fixation avec l'enveloppe extérieure, réalise une continuité de peau aérodynamique avec une faible trainée.

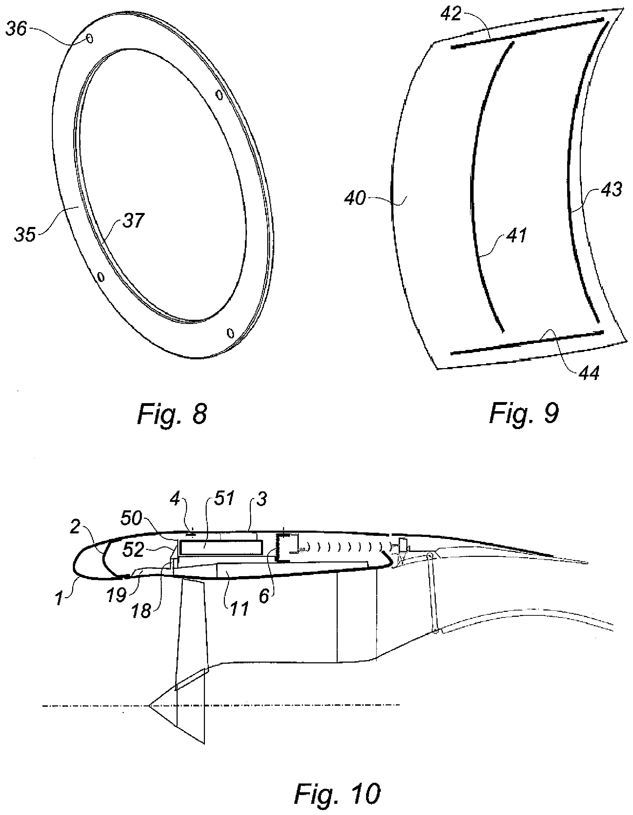

A la Figure 8, on a représenté un exemple de cloison aval (ou arrière) qui prend la forme d'un disque annulaire plat 35 dont le bord intérieur 37 est destiné à venir se solidariser à l'aide de brides non représentées sur la surface extérieure de l'enveloppe intérieure (voir 11, Figure 2) de la section d'entrée de la nacelle ou du carter de soufflante.

Les deux fonctions principales de la cloison aval sont de servir de support à l'enveloppe extérieure ou capot de soufflante et de servir de second obstacle aux projectiles qui auraient traversés la cloison amont. Dans l'invention, pour permettre de supporter correctement l'enveloppe extérieure, la cloison aval est reculée le long de l'axe central de la nacelle le plus près possible de la position de repos de l'inverseur de poussée ainsi qu'il a été exposé plus haut.

A la Figure 9, on a représenté une vue schématique d'un secteur de l'enveloppe extérieure qui comporte une plaque incurvée 40, vue de son côté intérieur, et sur laquelle sont disposées deux lignes de fixations 42 et 44 avec les deux secteurs voisins du secteur 40 et deux lignes de fixations 41 et 43 respectivement à la cloison aval (non représentée) et au bord homologue de la lèvre avant étendue. On note que l'orientation de la Figure 9 est inverse de l'orientation de la Figure 2.

A la Figure 10, on a représenté un autre mode de réalisation d'une nacelle selon l'invention dans lequel au moins un secteur de cloison supplémentaire 50 a été disposé pour protéger en seconde intention un équipement 51 à protéger d'un impact qui aurait traversé la lèvre avant 1 puis la cloison amont 2. Le secteur de cloison supplémentaire 50 est monté sur un support annulaire réalisé sur la surface extérieure de l'enveloppe intérieure (19, 11) ou carter de soufflante. Dans le mode de réalisation de la Figure 10 qui reprend la plupart des éléments du mode de réalisation de la Figure 2 qui portent les mêmes numéros de référence et ne sont pas plus décrits, le support annulaire réalisé sur la surface extérieure de l'enveloppe intérieure est constitué par la bride d'attache 18 entre la virole acoustique 19 et le carter de soufflante 11.

Pour améliorer la tenue mécanique de la cloison supplémentaire 50, il est ajouté au moins en des positions angulaires déterminées, un ou plusieurs renforts comme le renfort 52. Notamment, l'équipement 51 à protéger est un calculateur de pilotage des services de la nacelle ou du moteur pour commander des services comme le dégivrage et/ou l'inversion de poussée, ou la régulation de la poussée moteur. Dans ce cas, l'implantation de l'équipement 51 dans la section d'entrée de la nacelle détermine le secteur (comme 40, Figure 9) de l'enveloppe extérieure (3, Figure 2, 3-1 à 3-3, Figure 4) qui peut être démontable en maintenance grâce à des moyens de fixation amovible (41 - 44). Les autres secteurs adjacents de l'enveloppe extérieure 3 peuvent rester fixés de manière permanente à la lèvre avant 1 et/ou à la cloison aval 6. La dépose d'un seul secteur 40 de l'enveloppe extérieure 3 permet de réduire la masse à démonter et à manipuler lors d'une opération de maintenance.

On note que la disposition décrite notamment à l'aide des modes de réalisation des Figures 2 et 10, permet de réduire la masse de la section d'entrée de nacelle comprenant ici la lèvre avant étendue 1 et l'enveloppe extérieure 3, en éliminant les brides d'attache et les moyens de fixation ainsi que la nécessité de disposer de trappes de visite, lourdes et fragilisant l'ensemble. Grâce à l'invention, il n'est plus nécessaire d'utiliser des systèmes d'ouverture de l'enveloppe extérieure ou capot de soufflante à l'aide d'un mécanisme à articulations avec des vérins et des béquilles de sécurité. Le démontage du seul secteur de l'enveloppe extérieure 3 démontable rend ce mécanisme inutile et réduit tant la complexité de la nacelle que sa masse, tout en permettant de conserver un écoulement laminaire autour de la nacelle le plus loin possible vers l'aval.

## Revendications

1. Nacelle pour turboréacteur d'aéronef du genre comportant une enveloppe intérieure (19, 11) sensiblement cylindrique, une enveloppe extérieure (3) sensiblement cylindrique, une cloison aval (6) et une cloison amont (2) et une lèvre avant (1) disposée en avant de la cloison amont (2), l'enveloppe intérieure étant du genre comportant une partie amont comportant une virole acoustique (19) reliée par une bride d'attache (18) à une partie aval comportant un carter de soufflante (11), **caractérisée en ce que** la lèvre avant (1) est étendue et disposée par-dessus la cloison amont (2) en présentant un bord aval (4) entre les cloisons amont (2) et aval (6) pour venir se solidariser avec un bord homologue de l'enveloppe extérieure (3) de manière à ménager un accès de maintenance à ladite bride d'attache (18), **caractérisé en ce que** la cloison aval (6) et la cloison amont (2) sont solidaires de ladite enveloppe intérieure (19, 11).

2. Nacelle selon la revendication 1, du genre comportant un inverseur de poussée, **caractérisée en ce que** la cloison aval (6) est disposée sur le carter de soufflante en limite de la zone de repos de l'inverseur de poussée (15-17) et **en ce que** l'enveloppe extérieure (3) s'étend au-delà de l'inverseur de poussée (15-17) sur la dite cloison aval (6).

3. Nacelle selon la revendication 1 ou 2, **caractérisée en ce que** l'enveloppe extérieure (3) est fixée par des moyens de fixation (5) aussi au bord de la cloison aval (6).

4. Nacelle selon l'une quelconque des revendications 1 à 3, **caractérisée en ce que** la fixation des bords homologues de la lèvre avant étendue (1) et de l'enveloppe extérieure (3) comporte au moins une plaque annulaire (21) portant des moyens de fixation (22, 23) au bord aval de la lèvre avant étendue et au bord homologue de l'enveloppe extérieure (3).

5. Nacelle selon la revendication 4, **caractérisée en ce que** la dite au moins une plaque annulaire (21) est intégrale avec la face intérieure du bord aval (4) de la lèvre avant étendue (1).

6. Nacelle selon l'une quelconque des revendications précédentes, **caractérisée en ce que** la lèvre avant étendue (1) et/ou l'enveloppe extérieure (3) sont réalisées en au moins deux secteurs angulaires.

7. Nacelle selon la revendication 6, **caractérisée en ce que** au moins un secteur angulaire (3-1 ; 40) de l'enveloppe extérieure (3) est doté de moyens de fixation amovibles (43) à la lèvre avant étendue (1) de moyens de fixation amovibles (41) à la cloison aval (6) et de moyens de fixation amovibles (42, 44) aux secteurs angulaires adjacents (3-2, 3-3) de l'enveloppe extérieure (3).

8. Nacelle selon l'une quelconque des revendications précédentes, **caractérisée en ce que** la lèvre avant étendue (1) et/ou l'enveloppe extérieure (3) est réalisée en métal, en aluminium notamment, et/ou en matériau composite ;

9. Nacelle selon la revendication 8, **caractérisée en ce que** la face intérieure de l'enveloppe extérieure (3) et/ou de la lèvre avant étendue (1) comporte des renforts annulaires (S, S' ; S").

10. Nacelle selon l'une au moins des revendications précédentes, **caractérisée en ce qu'**elle comporte au moins un secteur angulaire de cloison supplémentaire (50), solidaire de l'enveloppe intérieure de la section d'entrée de la nacelle et disposée entre la cloison amont (2) et la cloison aval (6).

## Patentansprüche

1. Gondel für Flugzeugturbostrahltriebwerk der Art, umfassend eine innere Hülle (19, 11), die im Wesentlichen zylindrisch ist, eine äußere Hülle (3), die im Wesentlichen zylindrisch ist, eine nachgelagerte Zwischenwand (6) und eine vorgelagerte Zwischenwand (2) und eine Frontlippe (1), die vor der vorgelagerten Zwischenwand (2) angeordnet ist, wobei die innere Hülle der Art ist, umfassend einen vorgelagerten Teil, der einen akustischen Ring (19) umfasst, der durch einen Befestigungsflansch (18) mit einem nachgelagerten Teil verbunden ist, der ein Gebläsegehäuse (11) umfasst, **dadurch gekennzeichnet, dass** die Frontlippe (1) über der vorgelagerten Zwischenwand (2) verlängert und angeordnet ist und einen nachgelagerten Rand (4) zwischen der vorgelagerten (2) und der nachgelagerten (6) Zwischenwand aufweist, um fest mit einem homologen Rand der äußeren Hülle (3) verbunden zu sein, um einen Wartungszugang zu dem Befestigungsflansch (18) zu installieren, **dadurch gekennzeichnet, dass** die nachgelagerte Zwischenwand (6) und die vorgelagerte Zwischenwand (2) mit der inneren Hülle (19, 11) fest verbunden sind.

2. Gondel nach Anspruch 1 der Art, umfassend einen Schubumkehrer, **dadurch gekennzeichnet, dass** die nachgelagerte Zwischenwand (6) auf dem Gebläsegehäuse an der Grenze des Ruhebereichs des Schubumkerers (15 - 17) angeordnet ist, und dadurch, dass sich die äußere Hülle (3) über den Schubumkehrer (15 - 17) hinaus auf der nachgelagerten Zwischenwand (6) verlängert.

3. Gondel nach Anspruch 1 oder 2, **dadurch gekennzeichnet, dass** die äußere Hülle (3) durch Mittel zur Befestigung (5) auch an den Rand der nachgelagerten Zwischenwand (6) befestigt ist.

4. Gondel nach einem der Ansprüche 1 bis 3, **dadurch gekennzeichnet, dass** die Befestigung der homologen Ränder der verlängerten Frontlippe (1) und die äußere Hülle (3) mindestens eine runde Platte (21) umfasst, die Mittel zur Befestigung (22, 23) an den nachgelagerten Rand der verlängerten Frontlippe und an den homologen Rand der äußeren Hülle (3) trägt.

5. Gondel nach Anspruch 4, **dadurch gekennzeichnet, dass** die mindestens eine runde Platte (21) mit der Innenseite des nachgelagerten Rands (4) der verlängerten Frontlippe (1) einstückig ist.

6. Gondel nach einem der vorhergehenden Ansprüche, **dadurch gekennzeichnet, dass** die verlängerte Frontlippe (1) und/oder die äußere Hülle (3) in mindestens zwei Winkelsektoren durchgeführt werden.

7. Gondel nach Anspruch 6, **dadurch gekennzeichnet, dass** mindestens ein Winkelsektor (3 - 1; 40) der äußeren Hülle (3) mit entfernbaren Mitteln zur Befestigung (43) an die verlängerte Frontlippe (1), entfernbaren Mitteln zur Befestigung (41) an die nachgelagerte Zwischenwand (6) und entfernbaren Mitteln zur Befestigung (42, 44) an die benachbarten Winkelsektoren (3 - 2, 3 - 3) der äußeren Hülse (3) ausgestattet ist.

8. Gondel nach einem der vorhergehenden Ansprüche, **dadurch gekennzeichnet, dass** die verlängerte Frontlippe (1) und/oder die äußere Hülle (3) aus Metall, insbesondere aus Aluminium, und/oder aus Verbundmaterial hergestellt ist.

9. Gondel nach Anspruch 8, **dadurch gekennzeichnet, dass** die Innenseite der äußeren Hülle (3) und/oder die erweiterte Frontlippe (1) runde Verstärkungen (S, S'; S") umfasst.

10. Gondel nach mindestens einem der vorhergehenden Ansprüche, **dadurch gekennzeichnet, dass** sie mindestens einen Winkelsektor einer zusätzlichen Zwischenwand (50) umfasst, der mit der inneren Hülle des Eingangssektors der Gondel fest verbunden und zwischen der vorgelagerten Zwischenwand (2) und der nachgelagerten Zwischenwand (6) angeordnet ist.

## Claims

1. A nacelle for an aircraft turbojet engine of the kind including a substantially cylindrical internal envelope (19, 11), a substantially cylindrical external envelope (3), a downstream partition wall (6) and an upstream partition wall (2) and a front lip (1) disposed ahead of the upstream partition wall (2), the internal envelope being of the kind including an upstream portion including an acoustic shroud (19) connected by an attachment flange (18) to a downstream portion including a fan casing (11), **characterized in that** the front lip (1) is extended and disposed over the upstream partition wall (2) by having a downstream edge (4) between the upstream (2) and downstream (6) partition walls to be secured with a homologous edge of the external envelope (3) so as to form a maintenance access to said attachment flange (18), **characterized in that** the downstream partition wall (6) and the upstream partition wall (2) are secured to said internal envelope (19, 11).

2. The nacelle according to claim 1, of the kind including a thrust reverser, **characterized in that** the downstream partition wall (6) is disposed on the fan casing at the limit of the rest area of the thrust reverser (15-17) and **in that** the external envelope (3) extends beyond the thrust reverser (15-17) on said downstream partition wall (6).

3. The nacelle according to claim 1 or 2, **characterized in that** the external envelope (3) is fastened by means (5) for also fastening to the edge of the downstream partition wall (6).

4. The nacelle according to any one of claims 1 to 3, **characterized in that** fastening the homologous edges of the extended front lip (1) and of the external envelope (3) includes at least one annular plate (21) carrying means (22, 23) for fastening to the downstream edge of the extended front lip and to the homologous edge of the external envelope (3).

5. The nacelle according to claim 4, **characterized in that** said at least one annular plate (21) is integral with the internal face of the downstream edge (4) of the extended front lip (1).

6. The nacelle according to any one of the preceding claims, **characterized in that** the extended front lip (1) and/or the external envelope (3) are made into at least two angular sectors.

7. The nacelle according to claim 6, **characterized in that** at least one angular sector (3-1; 40) of the external envelope (3) is provided with removable means (43) for fastening to the extended front lip (1), removable means (41) for fastening to the downstream partition wall (6) and removable means (42, 44) for fastening to the adjacent angular sectors (3-2, 3-3) of the external envelope (3).

8. The nacelle according to any one of the preceding claims, **characterized in that** the extended front lip (1) and/or the external envelope (3) is made of a metal, of aluminum in particular, and/or of a composite material.

9. The nacelle according to claim 8, **characterized in that** the internal face of the external envelope (3) and/or of the extended front lip (1) includes annular reinforcements (S, S'; S").

10. The nacelle according to at least one of the preceding claims, **characterized in that** it includes at least one additional partition wall angular sector (50), secured to the internal envelope of the inlet section of the nacelle and disposed between the upstream partition wall (2) and the downstream partition wall (6).
